# EUROPÄISCHE PATENTANMELDUNG

(11) **EP 0 896 266 A1**
(43) Veröffentlichungstag der Anmeldung: **10.02.1999**
(21) Anmeldenummer: 98113775.5
(22) Anmeldetag: 23.07.1998
(51) Int. Cl.: G05B 19/401, G05B 19/404

(54) **Kalibrierverfahren für rotierende Werkzeuge**

(30) Priorität: 08.08.1997 DE 19734469
(71) Anmelder: Wacker Siltronic Gesellschaft für Halbleitermaterialien Aktiengesellschaft, 84489 Burghausen (DE)
(72) Erfinder: Kobler, Karl, 5230 Mattighofen (AT); Zwirglmaier, Hermann, 84576 Teising (DE); Malcok, Hanifi, 84489 Burghausen (DE)
(74) Vertreter: Rimböck, Karl-Heinz, Dr.

(57) **Zusammenfassung**

Verfahren zur Kalibrierkontrolle und Kalibrierung von rotierenden Werkzeugen, die einer Auslenkung unterliegen, dadurch gekennzeichnet, daß zumindest eine bekannte Auslenkung bei einer ersten vorgegebenen Drehzahl erfaßt wird.

## Beschreibung

Die Erfindung betrifft ein Verfahren zur Kalibrierung von rotierenden Werkzeugen, die einer Auslenkung unterliegen.

Bisher wurden Werkzeugmaschinen, die rotierende Werkzeuge aufweisen und Wegmessungssensoren verwenden, kalibriert, indem ein Ausgangswert zwischen Sensor und Werkzeug eingestellt wurde, der als Basis für den vor jedem Arbeitsschritt vorgenommenen Nullabgleich zwischen Soll- und Istposition dient. Dieser Ausgangswert wurde mit einem Meßinstrument, wie einer Mikrometerschraube, gemessen. Dies ist insbesondere bei Fräsmaschinen, Drehbänken und Innenlochsägen der Fall. Insbesondere bei Innenlochsägen mußte das Sägeblatt ausgebaut werden, um das Wegmeßsystem zu überprüfen oder zu kalibrieren. Dies erfolgt aufgrund des Aufwandes üblicherweise einmal im Monat. Falls sich in der Zwischenzeit die Kalibrierung des Wegmeßsystems veränderte, wurden die damit geschnittenen Gegenstände falsch geschnitten, bis die Kalibrierung wieder vorgenommen wurde.

Es ist Aufgabe der Erfindung, den Stand der Technik zu verbessern und insbesondere ein einfaches und schnelles Verfahren zur Kalibrierkontrolle und Kalibrierung von Werkzeugmaschinen, die rotierende Werkzeuge aufweisen, zur Verfügung zu stellen.

Diese Aufgabe wird durch die Erfindung gelöst.

Gegenstand der Erfindung ist ein Verfahren zur Kalibrierkontrolle und Kalibrierung von rotierenden Werkzeugen, die einer Auslenkung unterliegen, dadurch gekennzeichnet, daß zumindest eine bekannte Auslenkung bei einer vorgegebenen Drehzahl erfaßt wird.

Werkzeugmaschinen, die rotierende Werkzeuge aufweisen, die einer bekannten Auslenkung unterliegen, gibt es viele, wie zum Beispiel Fräsmaschinen, Drehbänke, Schleifmaschinen und Innenlochsägen. Diese Erfindung wird am Beispiel von vorzugsweise Innenlochsägen beschrieben. Sie läßt sich aber auf alle Werkzeugmaschinen, die rotierende Werkzeuge aufweisen, übertragen.

Zum präzisen Zerteilen von stabförmigen Werkstücken, beispielsweise aus Glas, Quarz, keramischem oder oxidischem Material, wie etwa Rubin oder Gallium-Gadolinium-Granat, aber auch Verbindungs- oder Elementhalbleitermaterialien, wie etwa Galliumarsenid oder Indiumphosphid, sowie insbesondere Silicium oder Germanium in Scheiben werden in den meisten Fällen Innenlochsägen eingesetzt, da sich damit die oftmals strengen Anforderungen an die geometrische Qualität der erhaltenen Produkte besonders gut erfüllen lassen. Als Sägeblatt dienen dabei kreisrunde Dünnblechscheiben, die konzentrisch zum Außenumfang eine zentrale kreisförmige Bohrung, das Innenloch, aufweisen. Dessen Umfangsbereich ist mit einem Schneidbelag versehen, welcher in der Regel aus in eine Bindungsmatrix eingebetteten Hartstoffkörnern besteht. Für das Zersägen von Stäben aus Halbleitermaterial, wie etwa Silicium, in dünne Scheiben von ca. 0,1 bis 1 mm Dicke, wie sie z.B. bei der Herstellung von elektronischen oder Leistungsbauelementen eingesetzt werden, haben sich beispielsweise Schneidbeläge mit tropfenförmigem Querschnitt bewährt, die aus in eine Metall-, vorzugsweise Nickelmatrix eingebetteten Diamant- oder Bornitridkörnern bestehen.

Das Sägeblatt wird an seinem Außenumfang in ein Spannsystem, welches beispielsweise gemäß den in der DE-PS 34 42 730, der US-PS 3,175,548, der US-PS 3,039,235 oder der DE-PS 28 41 653 beschriebenen Ausführungsformen gestaltet sein kann, eingespannt und sitzt möglichst koaxial und rotationssymmetrisch auf dem in der Regel becherartig aufgeweiteten Rotor der Sägemaschine. Das zu zersägende Werkstück, z.B. ein Siliciumstab, wird im allgemeinen mittels einer Adaptiereinrichtung in der Werkstückhalterung befestigt und über einen Zustellmechanismus in die vorgesehene Schnittposition gebracht und dort gehalten.

Beim Sägevorgang werden das rotierende Sägeblatt und das Werkstück einer Relativbewegung unterworfen, durch welche sich die Schneidkante radial durch das Werkstück hindurcharbeitet, bis schließlich die gewünschte Scheibe abgetrennt ist. Bei den bekannten Innenlochsägen werden dafür verschiedene Varianten eingesetzt, bei denen beispielsweise das Werkstück die Schnittbewegung bei fester Position des Sägeblattes ausführt, oder das Sägeblatt durch das in fester Position befindliche Werkstück bewegt wird, wobei das Werkstück sich sowohl in horizontaler als auch in vertikaler Lage befinden kann, mit dem entsprechend vertikal bzw. horizontal aufgespannten Sägeblatt.

Allgemein wirken bei jeder dieser genannten Varianten neben der radial gerichteten Hauptschnittkraft beim Trennvorgang jedoch auf das Sägeblatt zusätzliche axial, d.h. senkrecht zur Sägeblattebene gerichtete Kräfte, die seinen Lauf im Werkstück beeinflussen und zu Abweichungen von der gewünschten Schnittlinie führen können. Als mögliche Ursachen kommen beispielsweise Unregelmäßigkeiten des Schneidbelages, wie etwa ungleichmäßige Abnutzung, unterschiedliche Belegungsdichte mit Schneidkörnern, ungleichmäßige Schneidkorngeometrien oder unterschiedliche Ablagerung von abgetragenem Material auf der Schneidkante in Frage, aber auch unregelmäßige Druckverhältnisse im Sägespalt oder Verlagerungen des Werkstückes oder des Sägemaschinenrotors.

Als Folge dieser Auslenkung des Sägeblattes zeigen sich am erhaltenen Produkt, der Scheibe, Abweichungen von der eigentlich gewünschten Form. Wird beispielsweise das Sägeblatt bei zwei aufeinanderfolgenden Sägevorgängen jeweils gleichgerichtet und gleich weit aus der Ideallage ausgelenkt, so sind die durch diese beiden Schnitte erzeugten Oberflächen einer Scheibe nicht ideal eben, sondern parallel gekrümmt; die Scheibe hat zwar keine Dickenvariation, sondern einen sogenannten "warp", eine Krümmung. Sind die Auslenkungen gegensinnig, so ergeben sich Scheiben mit einer Dickenvariation. Für die Charakterisierung der Scheiben im Hinblick auf solche Geometriefehler sind standardisierte Testverfahren entwickelt worden, wie etwa das Verfahren gemäß der ASTM-Norm F 657-80, nach dem sich die Werte für den "warp" und/oder "bow" einer Scheibe ermitteln lassen. Einwandfreie Scheiben dürfen dabei nur innerhalb enger Toleranzgrenzen von einer vorgegebenen Sollgeometrie abweichen; dies gilt insbesondere für Halbleiterscheiben zum Einsatz bei der Herstellung elektronischer, insbesondere hochintegrierter Bauelemente und vor allem bei photolithographischen Prozessen, bei denen an die geometrische Präzision besonders hohe Anforderungen gestellt werden.

Dies wird mit einem Verfahren erreicht, das die Relativlage der Sägeblattspannebene, d.h. mithin der von der Spannkante des Spannsystems aufgespannten gedachten Ebene, und des Werkstückes zueinander in axialer Richtung, mit der Drehachse des Spannsystems als Bezugsachse, kontrolliert verändert, bis die Istlage am Schnittort von der Sollage allenfalls um einen noch als zulässig erachteten Toleranzwert abweicht.

Grundsätzlich kann die translatorische axiale Relativbewegung durch Nachführung des Werkstückes, durch Nachführung des Sägeblattes oder durch eine Kombination dieser beiden Nachführbewegungen erzielt werden. In den meisten Fällen ist es ausreichend, wenn alternativ eine der beiden Möglichkeiten angewendet wird, so daß auf die grundsätzlich zwar nicht ausgeschlossene, aber regeltechnisch und apparativ aufwendigere Kombination verzichtet werden kann.

Allgemein erfordert jegliche Art der Nachführung eine genügend steife Aufspannung des Werkstückes, um das während des Sägevorganges auftretende Spiel möglichst gering zu halten. Diese Forderung wird in der Regel von den üblichen Werkstücktischen in ausreichendem Maße erfüllt, da auch bei den herkömmlichen Innenlochsägeverfahren eine genaue und möglichst wenig variierende Werkstückposition unerläßlich ist.

Des weiteren ist eine möglichst genaue Erfassung des Schnittverlaufes, letztlich also eine möglichst exakte Beobachtung des Weges der Schnittkante durch das Werkstück bzw. der Auslenkung des Sägeblattes während des Schnittes eine wichtige Voraussetzung für die Durchführung des erfindungsgemäßen Verfahrens. Meßeinheiten, mit deren Hilfe sich jeweils die Istposition des rotierenden Sägeblattes im Werkstück erfassen läßt, sind bekannt und lassen sich bei dem Verfahren einsetzen, sofern sie eine genügend genaue Messung gestatten. Dabei kommen sowohl solche Meßsensoren in Frage, die die direkte Erfassung der jeweiligen Istposition ermöglichen, d.h. bei denen das Meßsignal durch die entstehende Scheibe hindurch erzeugt wird, als auch solche, bei denen das Meßsignal an einer oder mehreren Positionen außerhalb des Eingriffsbereiches des Sägeblattes in das Werkstück aufgenommen wird und somit indirekt auf die Istposition im Werkstück geschlossen werden kann. Geeignete Meßeinheiten sind bekannt und im Handel erhältlich; Beispiele sind etwa Wirbelstromsensoren, mit deren Hilfe Abstandsänderungen zwischen Sensor und Sägeblatt über induzierte Ströme registriert und in Meßsignale umgewandelt werden können, oder auch magnetische Sensoren, die die mit dem Abstand wechselnde Stärke eines magnetischen Feldes beispielsweise über die daraus resultierenden Anziehungskräfte registrieren und in Signale umsetzen. Grundsätzlich ist auch der Einsatz von licht- oder infrarotoptischen Sensoren nicht ausgeschlossen. Bei der Auswahl des entsprechenden Meßsystems ist gegebenenfalls zu berücksichtigen, daß auch das zu zersägenden Material die Messung beeinflussen kann.

Allgemein ist jedoch festzuhalten, daß die erzielten Ergebnisse um so besser sind, je genauer und zuverlässiger die Erfassung der Istposition des Sägeblattes mit dem jeweils ausgewählten Meßsensor gelingt.

Wenn im Verlauf des Trennvorganges die ermittelte Istposition um mehr als einen in der Regel von Fall zu Fall nach Maßgabe der für die Scheiben geforderten Spezifikationen festgelegten, noch tolerierbaren Grenzwert von der Sollposition abweicht, wird diese Abweichung in der erfindungsgemäßen Weise zumindest teilweise, d.h. so weit ausgeglichen, bis sich die Istposition wieder in dem die Sollposition umgebenden zulässigen Toleranzbereich befindet. Die Genauigkeit, mit der dem vorgegebenen Wert gefolgt wird, läßt sich dabei so weit steigern, daß maximale Abweichungen um ca. ± 1µm und weniger eingehalten werden können. Als Ausgangswert, der auch als Basis für den zweckmäßig vor jedem Sägeschnitt vorgenommenen Nullabgleich zwischen Soll- und Istposition dienen kann, wird vorteilhaft der dem ungestörten Sägeblattlauf entsprechende Meßwert verwendet, der vor dem Kontakt des frei rotierenden Sägeblattes mit dem Werkstück gemessen wird.

Eine festgestellte Abweichung in Richtung Scheibe oder Stab kann dann gemäß einer möglichen Verfahrensvariante dadurch zumindest teilweise ausgeglichen werden, daß das Werkstück dieser Abweichung durch eine gleichgerichtete Bewegung nachgeführt wird, bis die Istposition des Sägeblattes der Sollposition in der gewünschten Genauigkeit angeglichen ist. Da für diese Nachführbewegung in der Regel Translationen um wenige µm ausreichend sind, kommen für ihre Ausführung nur solche Stellglieder in Frage, die eine ausreichend genaue Steuerung gestatten und sich durch ein ausreichend dynamisches Regelverhalten auszeichnen. Grundsätzlich sind dafür vielerlei Systeme denkbar, wie etwa auf hydraulischer, pneumatischer, elektromotorischer oder mechanischer Basis, sofern sie die erforderliche hochgenaue Positionierung ermöglichen. Bevorzugt werden aus Gründen der erzielbaren Wegauflösung und Verfahrgeschwindigkeiten piezoelektrische Antriebseinheiten verwendet, bei denen die Translationsbewegung über eine Änderung der angelegten Spannung bewirkt und gesteuert werden kann. Solche Einheiten sind im Handel erhältlich; sie werden zweckmäßig so angebracht, daß sie auf die Werkstückhalterung einwirken, jedoch die Zustellung des Werkstückes vor jedem Sägevorgang unbeeinflußt lassen.

Damit der Abgleich zwischen Soll- und Istwert auch korrekt erfolgt, muß das Werkzeugmaschinensystem, das aus Sensor und rotierenden Werkzeug besteht, kalibriert werden. Nach dem erfindungsgemäßen Verfahren zur Kalibrierung ist es nun möglich, die Werkzeugmaschinen täglich zu kontrollieren und gegebenenfalls zu kalibrieren, indem eine bekannte Auslenkung bei einer vorgegebenen Drehzahl bestimmt wird, vorzugsweise wird noch eine zweite bekannte Auslenkung bei einer von der ersten Drehzahl verschiedenen Drehzahl gemessenen.

So wird zum Beispiel bei einer Drehzahländerung der Abstand zwischen Sägeblatt und Wegmessungssensor verändert.

Bevorzugt wird bei einer Innenlochsäge eine Drehzahl von 1000 U/min und von 1500 U/min gemessen und die jeweilige Auslenkung bestimmt.

So wird zum Beispiel bei einer bestimmten Säge eine Auslenkung des Sägeblatts von ca. 9 µm je 100 U/min und bei einer anderen bestimmten Säge eine Auslenkung von 3 µm je 100 U/min festgestellt. Wird dieser Wert um einen bestimmten Prozentsatz über- oder unterschritten, je nach zulässiger Toleranz, dürfte dieser Wert bei vorzugsweise 1 % bis 10 % liegen, besonders bevorzugt liegt der Wert bei einer Innenlochsäge bei 1µm bis 2µm. Dieser Wert wird vorzugsweise mit dem bereits an der Werkzeugmaschine vorhandenen, berührungslos messenden Wegmessungssensor, der vorzugsweise ein induktiv-potentiometrischer, linear induktiver, optischer, kapazitativer und bevorzugt auf Wirbelstrom basierender Sensor ist, gemessen. Dieser Wert wird dann für die automatische Kalibrierkontrolle und Kalibrierung mit einem in einem Rechner vorgegebenen Wert der Auslenkung verglichen. Falls dieser Wert nicht mehr mit der Auslenkung übereinstimmt, steht fest, daß am Werkzeugmaschinensystem aus Sägeblatt und Wegmeßsystem eine mechanische und/oder elektrische Störung vorliegt. Die Störung, mechanischer und/oder elektrischer Art muß behoben werden, und anschließend muß das Wegmeßsystem neu kalibriert werden.

Vorteile des erfindungsgemäßen Verfahrens sind, daß sich dieses Verfahren jederzeit durchführen läßt. Vorteilhafterweise wird das erfindungsgemäße Verfahren zur Kalibrierkontrolle einmal am Tag automatisch durchgeführt. Das erfindungsgemäße Verfahren zur Kalibrierung kann jedoch auch jederzeit manuell ausgelöst werden. Bei negativem Ergebnis der Überprüfung kann die Werkzeugmaschine automatisch gestoppt werden. Ein großer Vorteil ist, daß mögliche Defekte rasch erkannt werden und zur Überprüfung das Sägeblatt nicht mehr ausgebaut werden muß.

Durch die tägliche automatische Überprüfung werden mögliche Defekte des Wegmeßsystems rechtzeitig erkannt. Daraus folgen ein stabiler Prozessverlauf, bessere Geometrie und eine höhere Ausbeute, da durch die jederzeit mögliche Kalibrierkontrolle und Kalibrierung die Werkzeugmaschine immer korrekt arbeitet, wogegen Probleme bei einer monatlichen Überprüfung erst entsprechend später aufgefallen wäre.

## Patentansprüche

1. Verfahren zur Kalibrierkontrolle und Kalibrierung von rotierenden Werkzeugen, die einer Auslenkung unterliegen, dadurch gekennzeichnet, daß zumindest eine bekannte Auslenkung bei einer ersten vorgegebenen Drehzahl erfaßt wird.

2. Verfahren zur Kalibrierkontrolle und Kalibrierung von rotierenden Werkzeugen, die einer Auslenkung unterliegen, nach Anspruch 1, dadurch gekennzeichnet, daß zumindest eine weitere bekannte Auslenkung bei einer vorgegebenen, von der ersten Drehzahl verschiedenen Drehzahl erfaßt wird.

3. Verfahren zur Kalibrierkontrolle und Kalibrierung von rotierenden Werkzeugen, die einer Auslenkung unterliegen, nach Anspruch 1 oder 2, dadurch gekennzeichnet, daß das Ergebnis zur Kalibrierung einer Vorrichtung verwendet wird, die das rotierende Werkzeug aufweist.

4. Verwendung des Verfahrens nach Anspruch 1 oder 2, zur Kalibrierkontrolle und Kalibrierung von berührungslos messenden Wegmessungssensoren.
